## Europäisches Patentamt
## European Patent Office
## Office européen des brevets

(19)

(11) Veröffentlichungsnummer: **0 013 745**
**B1**

(12) **EUROPÄISCHE PATENTSCHRIFT**

(45) Veröffentlichungstag der Patentschrift: **13.05.81**

(51) Int. Cl.³: **B 32 B 27/00, B 65 D 27/12**

(21) Anmeldenummer: **79105236.8**

(22) Anmeldetag: **18.12.79**

(54) Verbundfolie, Verfahren zu deren Herstellung und deren Verwendung.

(30) Priorität: **09.01.79 GB 7900804**
**29.08.79 DE 2934850**

(43) Veröffentlichungstag der Anmeldung:
**06.08.80 Patentblatt 80/16**

(45) Bekanntmachung des Hinweises auf die Patenterteilung:
**13.05.81 Patentblatt 81/19**

(84) Benannte Vertragsstaaten:
**AT BE CH DE FR GB IT LU NL SE**

(56) Entgegenhaltungen:
**DE - B - 1 278 806**
**GB - A - 1 116 041**
**US - A - 3 468 736**
**US - A - 3 619 344**

(73) Patentinhaber: **BRDR. Schur International A/S**
**Englandsvej**
**DK-8700 Horsens (DK)**

(72) Erfinder: **Sorensen, Leif**
**Husoddebakken 49**
**D-8700 Horsens (DK)**

(74) Vertreter: **Weber, Dieter, Dr. et al,**
**Patentanwälte Dr. D. Weber und Dipl.-Phys. K.**
**Seiffert Gustav-Freytag-Strasse 25**
**D-6200 Wiesbaden 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verbundfolie, Verfahren zu deren Herstellung und deren Verwendung

Heißsiegelfähige Kunststoffolien sind in den unterschiedlichsten Zusammensetzungen als Monofolien oder Verbundfolien bekannt. Diese werden gewöhnlich mit Hilfe erhitzter Siegelbacken miteinander verschweißt, etwa zur Gewinnung von Beutelpackungen. Der Stand der Technik zielte dabei stets darauf hin, Kunststoffolien zu bekommen, die beim Heißsiegeln möglichst feste Schweißverbindungen ergeben.

Es ist auch bereits bekannt, daß bestimmte Kunststoffe mit Hilfe eines elektromagnetischen Feldes hochfrequenzgeschweißt werden können, wobei in diesem Verfahren die Kunststoffmoleküle in Schwingungen versetzt werden und so ohne äußeres Erhitzen oder mit nur geringem äußerem Erhitzen die für den Schweißvorgang erforderliche Wärme in dem Kunststoff selbst erzeugen. Das heißt, daß nur ganz bestimmte Kunststoffe hochfrequenzschweißbar sind, wie beispielsweise Polyvinylchlorid.

Auf bestimmten Anwendungsgebieten ist es erwünscht, Packungen, wie insbesondere Beutelpackungen, zu bekommen, bei denen bestimmte Schweißnähte so ausgebildet sind, daß sie bei der Lagerung der gefüllten Packung dicht verschlossen sind, zur Entnahme des Packungsinhaltes aber leicht geöffnet werden können, ohne daß die Beutelpackung verletzt wird. Beispielsweise ist ein solcher Beutelpackungsverschluß bei Tabakbeuteln erwünscht, um den Tabak bei der Lagerung gegen Verlust von Feuchtigkeit und Aromastoffen zu schützen, bei der Verwendung aber die Beutelöffnung leicht aufziehen zu können, ohne daß der Beutel verletzt wird. Dies ist bei Tabakbeuteln besonders wichtig, da nach dem erstmaligen Öffnen dem Beutel nach und nach Tabak entnommen wird, so daß ein eingerissener Beutel nicht nur optisch schlecht wäre, sondern auch zu einem Herausfallen des Tabaks führen würde.

Es ist auch bereits bekannt, mit Hilfe von Schweißbacken schälfähige Siegelnähte zu bekommen, indem man die Heißsiegelfähigkeit des Kunststoffes durch eine Lackschicht schwächt oder indem man zwei relativ schlecht miteinander zu versiegelnde Kunststoffolien miteinander laminiert und an der Beutelöffnung den Verbundfolienrand derart einfaltet, daß an der Siegelnaht die beiden unterschiedlichen Kunststoffschichten in Anlage zueinander kommen. Beide Methoden sind verfahrenstechnisch aufwendig und umständlich, da sie zusätzliche Verfahrensschritte erfordern. Außerdem kann der Geschmack oder Geruch der in der Beutelpackung verpackten Ware durch einen Lack beeinträchtigt werden, und das Einfalten einer Kante an der Beutelöffnung führt dazu, daß die Beutelöffnung beim Auseinanderziehen sich notgedrungen unerwünscht weit öffnet, was seinerseits zu einem Herausfallen eines Teils des Beutelinhaltes führen kann. Schließlich ist auch die Anwendung eines Verfahrens, das die Beutelöffnung nach dem Befüllen, also in unmittelbarer Nachbarschaft zu der verpackten Ware, von außen erhitzt, unerwünscht, da die Ware darunter leiden kann. Schließlich beeinträchtigt das Heißsiegeln auch das äußere Erscheinungsbild der Packung, da die Heißsiegelnaht sich durchdrückt.

Die der Erfindung zu Grunde liegende Aufgabe bestand nun darin, die oben geschilderten Nachteile des Standes der Technik zu vermeiden und eine gegen sich selbst schälfähig siegelbare oder schweißbare Kunststoffolie zu bekommen. Eine solche gegen sich selbst schälfähige Kunststoffolie hätte gegenüber bekannten Folien den Vorteil, daß man mit ihr schälfähige Siegelnähte bekäme, ohne einen Fremdstoff, wie einen Lack, aufbringen zu müssen und ohne Maßnahmen, wie das Einfalten der Öffnungskante, anwenden zu müssen.

Die obige Aufgabe wird erfindungsgemäß mit einer Verbundfolie gelöst, die aus wenigstens einer Trägerschicht und einer hochfrequenzschweißfähigen Oberflächenschicht aus einem Copolymerisat aus 70 bis 90 Mol-% Äthyleneinheiten und 10 bis 30 Mol-% Vinylacetateinheiten besteht.

Daß man mit einer solchen erfindungsgemäßen Verbundfolie schälfähige Schweißnähte oder Siegelnähte bekommt, ist äußerst überraschend, da Polyäthylen bekanntermaßen nicht hochfrequenzschweißfähig ist und in dem für die Oberflächenschicht verwendeten Copolymerisat die Äthyleneinheiten vorherrschen.

Die erfindungsgemäßen Verbundfolien haben zahlreiche Vorteile gegenüber bekannten Folien, insbesondere für die Herstellung von Beutelpackungen mit schälfähig versiegelten Öffnungen. Man bekommt solche schälfähig versiegelten Öffnungen nämlich erfindungsgemäß ohne Verwendung von Fremdstoffen und ohne Einfalten des Öffnungsrandes ("overwrap") sowie ohne Anwendung einer stark erhitzten Siegeleinrichtung, wie Siegelbacken, die den Beutelinhalt gefährden können und auf der Beutelvorderseite das Aussehen beeinträchtigen. Auch bekommt man mit den erfindungsgemäßen Verbundfolien insofern eine Verbesserung, als beim Siegeln der Folie gegen sich selbst eine Schweißnaht erhöhter Haltbarkeit und Dichte während der Lagerung, gleichzeitig aber eine leichtere Öffenbarkeit bei der Verwendung erzielt wird. Die erhöhte Dichtheit und Stabilität der erfindungsgemäß durch Hochfrequenzschweißung erzielten Schweißnaht führt ihrerseits zu erhöhter Qualitätsbeständigkeit der verpackten Waren, wie beispielsweise zur Aufrechterhaltung des Feuchtigkeitsgehaltes, des Geschmackes und des Aromas von Tabak in solchermaßen erfindungsgemäß hergestellten Tabakpackungen.

Ein weiterer Vorteil der erfindungsgemäßen Verbundfolien besteht darin, daß sie einerseits durch Hochfrequenzschweißen gegen sich selbst schälfähig siegelbar und andererseits unter Bildung dauerhafter und undurchlässiger Schweißnähte heißsiegelfähig sind, wie beispielsweise mit Hilfe von Schweißbacken. Auf diese Weise kann man bei der Verwendung der erfindungsgemäßen Verbundfolie zur Herstellung von Beutelpackungen zunächst die Außenkanten der Beutelpackung durch Heißsiegelung dauerhaft verschweißen, sodann den Beutelinhalt einfüllen und schließlich durch Hochfrequenzschweißen ohen oder nur mit geringer Anwendung äußerer Wärme die Beutelöffnung mit einer schälfähigen Siegelnaht verschließen.

Das Optimum der Zusammensetzung des Copolymerisates für die Oberflächenschicht kann je nach der oder den verwendeten Trägerschichten variieren. Der Molprozentsatz des Copolymerisates an Vinylacetateinheiten liegt aber erfindungsgemäß zwischen 10 und 30 Mol-%, vorzugsweise zwischen 12 und 25 Mol-%, besonders bevorzugt zwischen 14 und 20 Mol-% und ganz besonders zwischen 14 und 18 Mol-%. Beispielsweise enthält eine gute Verbundfolie nach der Erfindung, deren Trägerschicht aus Polyäthylen besteht, etwa 16 Mol-% Vinylacetateinheiten im Copolymerisat.

Die erwünschte Zusammensetzung des erfindungsgemäß verwendeten Copolymerisates kann man entweder so erhalten, daß man von vornherein Vinylacetat und Äthylen in den erwünschten Mengenverhältnissen miteinander copolymerisiert. Oder aber man kann verschiedene Copolymerisate unterschiedlicher Anteile an Vinylacetateinheiten so miteinander verschneiden, daß man die erwüschte Endzusammensetzung bekommt. Beispielsweise kann man dabei ein Copolymerisat aus 97 Mol-% Äthyleneinheiten und 3 Mol-% Vinylacetateinheiten mit einem Copolymerisat aus nur 74 Mol-% Äthyleneinheiten und 26 Mol-% Vinylacetateinheiten miteinander verschneiden, um ein Copolymerisatgemisch mit Vinylacetateinheiten in dem bevorzugten Bereich von 14 bis 20% zu bekommen.

In den erfindungsgemaß fü die Oberflächenschicht verwendeten Copolymerisaten liegt in dem beanspruchten Bereich von 10 bis 30 Mol-% dieser Molprozentsatz so, daß das Polymer der Oberflächenschicht ausreichend polare elektronegative Gruppen enthält, um hochfrequenzschweißfähig zu sein, andererseits aber nur so viele polare elektronegative Gruppen enthält, um keine feste, d.h. nicht schälfähige Schweißverbindung zu ergeben.

Das Copolymerisat, welches erfindungsgemäß für die Oberflächenschicht verwendet wird, läßt sich praktisch nicht oder nur schwer allein extrudieren, weil die dabei entstehende Folie kurz hinter der Extruderdüse noch zu weich ist und so dickenmäßig nicht gesteuert werden kann. Aus diesem Grund wird das Copolymerisat erfindungsgemäß als Oberflächenschicht auf wenigstens eine Trägerschicht aufgebracht. Diese stabilisiert die gesamte Verbundfolie und läßt eine genaue Steuerung der Eigenschaften zu. So kann die Dicke der Verbundfolie an die jeweiligen Anforderungen angepaßt werden.

Der Träger für das Copolymerisat kann aus einer Schicht oder aus mehreren miteinander laminierten Schichten bestehen. Bevorzugt besteht die Trägerschicht aus Polyäthylen und/oder Polypropylen. Sie kann aber auch beispielsweise aus einem Polyester, wie Polyäthylenterephthalat, einem Polyamid, einem anderen Polyolefin oder anderem Kunststoff bestehen. Auch kann der Träger aus einem Laminat verschiedener Kunststoffe dieser oder anderer thermoplastischer Kunststoffgruppen bestehen. Der spezielle Kunststoff oder die spezielle Kunststoffkombination für den Träger kann beliebig je nach dem Verwendungszweck der Verbundfolie ausgewählt werden. So ist es auch möglich, in den Träger eine Metallfolie oder eine Papierschicht einzuarbeiten oder die Folie durch Metallbedampfung zu metallisieren.

Die Oberflächenschicht aus dem erfindungsgemäßen Copolymerisat kann auf dem Träger in beliebiger und an sich bekannter Weise aufgebracht werden. So ist es möglich, zunächst den Träger durch Extrudieren oder andere bekannte Methoden als Folie oder Laminat herzustellen und ihn anschließend mit dem Copolymerisat zu beschichten. Eine besonders bequeme Methode besteht aber darin, ein thermoplastisches Trägerpolymer und das erfindungsgemäß für die Oberflächenschicht verwendete Copolymerisat gemeinsam in Folienform zu coextrudieren. In diesem Fall wird als Trägerpolymer bevorzugt Polyäthylen oder Polypropylen verwendet. Die so erhaltene Verbundfolie aus einer Trägerschicht und der Oberflächenschict aus dem erfindungsgemäßen Copolymerisat kann als solche verwendet oder aber mit anderen Folien laminiert, verklebt oder anderweitig vereinigt oder aber lackiert werden. Beispielsweise kann man die Verbundfolie aus einer Trägerschicht und der Copolymerisat-Oberflächenschicht mit einer Cellophanfolie vereinigen. Wesentlich ist erfindungsgemäß aber, daß jeweils mindestens eine der Oberflächenschichten, gegebenenfalls die Oberflächenschichten auf beiden Seiten, aus dem Copolymerisat aus Äthyleneinheiten und Vinylacetateinheiten bestehen.

Die erfindungsgemäßen Verbundfolien lassen sich auf vielen Verwendungsgebieten einsetzen, wo Schweißnähte erhalten werden sollen, die zeitweilig einen festen und dichten Abschluß ergeben, bei Bedarf aber schälfähig sind, wobei die beiden schälfähig aufeinandergeschweißten Folienbereiche leicht und ohne Einreißen der Folie voneinander getrennt werden können. Erfindungsgemäß verwendet man diese Verbundfolie also für schälfähige Hochfrequenzschweißnähte, wie beispielsweise und besonders für an ihren Öffnungen schälfähig versiegelte Beutelpackungen. Diese können unterschiedlichste Gestalt haben und beispielsweise Flachbeutel oder Seitenfaltbeutel sein, wobei die Kanten der Beutel mit Ausnahme der Öffnung in üblicher Weise, etwa mit Hilfe von Schweißbacken, heißversiegelt sind und eine dauerhafte, nicht schälfähige Schweißnaht besitzen. Die Öffnung dagegen wird durch Hochfrequenzschweißen schälfähig versiegelt. Das Hochfrequenzverschweißen erfolgt in bekannter Weise, wie beispielsweise bei etwa 27 mHz.

Die als Verbundfolie nach der Erfindung hergestellten Beutelpackungen können zum Verpacken beliebiger Dinge, wie von Lebensmitteln und Genußmitteln, Getränken, Haushaltsgegenständen, technischen Artikeln oder dergleichen verwendet werden, wie Fleisch, Frischgemüse, Obst, Gewürze, Milch, Brot, Teigwaren oder Mehl, Schrauben, Elektroteile und dergleichen. Besonders eignet sich die erfindungsgemäße Verbundfolie zur Herstellung von Tabakbeuteln.

### Ausführungsbeispiel

Aus einem Copolymerisat aus 97 Mol-% Äthyleneinheiten und 3 Mol-% Vinylacetateinheiten und einem Copolymerisat aus 74 Mol-% Äthyleneinheiten und 26 Mol-% Vinylacetateinheiten wurde ein Polymerisatverschnitt hergestellt, dessen Molprozentsatz an Äthyleneinheiten bei 84% und dessen Molprozentsatz an Vinylacetateinheiten bei 16% lag. Dieses Copolymerisat wurde mit Polyäthylen coextrudiert, wobei das Polyäthylen als Trägerschicht für das Copolymerisat diente.

Aus der so erhaltenen Verbundfolie wurden Tabakbeutel hergestellt, die aus der erfindungsgemäßen Verbundfolie und einer Polyäthylenfolie mit zwischengelegtem Papieretikett bestanden, wobei die Verbundfolie und die Polyäthylenfolie an den Rändern miteinander heißversiegelt waren. Die Seitennähte des Tabakbeutels wurden ebenfalls durch Heißsiegelung dauerhaft verschweißt. Die Beutelöffnung dagegen wurde nach dem Befüllen mit Tabak bei etwa 27 mHz hochfrequenzgeschweißt.

Die Dicke der erfindungsgemäßen Verbundfolie lag bei 0,05 mm, die Dicke der äußeren Polyäthylenfolie bei 0,03 mm.

Der schälfähige Verschluß der Beutelöffnung war bei der Lagerung dicht und ergab einen nur vernachlässigbaren Verlust an Feuchtigkeit und Aromatstoffen aus dem verpackten Tabak. Beim Öffnen dagegen ließ sich der Verschluß leicht aufschälen, ohne daß der Beutel an irgendeiner Stelle einriß.

### Patentansprüche

1. Verbundfolie bestehend aus wenigstens einer Trägerschicht und einer hochfrequenzschweißfähigen Oberflächenschicht aus einem Copolymerisat aus 70 bis 90 Mol-% Äthyleneinheiten und 10 bis 30 Mol-% Vinylacetateinheiten.

2. Verbundfolie nach Anspruch 1, dadurch gekennzeichnet, daß ihre Oberflächenschicht 12 bis 25 Mol-% Vinylacetateinheiten enthält.

3. Verbundfolie nach Anspruch 1, dadurch gekennzeichnet, daß ihre Oberflächenschicht 14 bis 20 Mol-% Vinylacetateinheiten enthält.

4. Verbundfolie nach Anspruch 1, dadurch gekennzeichnet, daß ihre Oberflächenschicht 14 bis 18 Mol-% Vinylacetateinheiten enthält.

5. Verbundfolie nach Anspruch 1 bis 4, dadurch gekennzeichnet, daß sie als wenigstens eine Trägerschicht eine solche aus einem extrudierbaren Kinststoff, vorzugsweise aus einem Polyolefin, Polyester oder Polyamid, enthält.

6. Verbundfolie nach Anspruch 5, dadurch gekennzeichnet, daß sie als wenigstens eine Trägerschicht eine solche aus Polyäthylen oder Polypropylen enthält.

7. Verfahren zur Herstellung einer Verbundfolie nach Anspruch 1 bis 6, dadurch gekennzeichnet, daß man ein thermoplastisches Trägerpolymer und ein Copolymerisat aus 70 bis 90 Mol-% Äthyleneinheiten und 10 bis 30 Mol-% Vinylacetateinheiten miteinander coextrudiert.

8. Verwendung einer Verbundfolie nach Anspruch 1 bis 6 für schälfähige Hochfrequenzschweißnähte.

9. Verwendung nach Anspruch 8 für an ihrer Öffnung schälfähig versiegelte Beutelpackungen.

### Revendications

1. Feuille composite comprenant au moins une couche support et une couche superficielle apte au soudage par haute fréquence, formée d'un produit de copolymérisation de 70 à 90 mol% d'unités éthylène et 10 à 30 mol% d'unités acétate de vinyle.

2. Feuille composite selon la revendication 1, caractérisée par le fait que sa couche superficielle contient 12 à 25 mol% d'unités acétate de vinyle.

3. Feuille composite selon la revendication 1, caractérisée par le fait que sa couche superficielle contient 14 à 20 mol% d'unités acétate de vinyle.

4. Feuille composite selon la revendication 1, caractérisée par le fait que sa couche superficielle contient 14 à 18 mol% d'unités acétate de vinyle.

5. Feuille composite selon l'une des revendications 1 à 4, caractérisée par le fait que sa ou ses couches supports sont formées d'une matière synthétique facile à extruder, de préférence d'une polyoléfine, d'un polyester ou d'une polyamide.

6. Feuille composite selon la revendication 5, caractérisée par le fait que sa ou ses couches supports sont formées de polyéthylène ou de polypropylène.

7 0013745 8

7. Procédé de fabrication d'une feuille composite selon les revendications 1 à 6, caractérisée par le fait que l'on coextrude ensemble un polymère support thermoplastique et un produit de copolymérisation de 70 à 90 mol% d'unités éthylène et 10 à 30 mol% d'unités acétate de vinyle.

8. Application d'une feuille composite selon les revendications 1 à 6 aux soudures pelables obtenues par doudage par haute fréquence.

9. Application, selon la revendication 8, pour emballages en sachet dont l'ouverture est pourvue d'un soudeur pelable.

**Claims**

1. Laminated sheet consisting of at least one substrate Layer and a high-frequency weldable surface layer comprising a copolymerisate of 70 to 90 mol percent of ethylene units and 10 to 30 mol percent of vinyl acetate units.

2. Laminated sheet according to claim 1, characterized in that the surface layer thereof contains 12 to 25 mol percent of vinyl acetate units.

3. Laminated sheet according to claim 1, characterized in that the surface layer thereof contains 14 to 20 mol percent of vinyl acetate units.

4. Laminated sheet according to claim 1, characterized in that the surface layer thereof contains 14 to 18 mol percent of vinyl acetate units.

5. Laminated sheet according to claim 1 through 4, characterized in that it contains as at least one substrate layer such a layer which consists of an extrudable synthetic resin preferably of polyolefin, polyester or polyamide.

6. Laminated sheet according to claim 5, characterized in that it contains as at least one substrate layer such a layer which consists of polyethylene or polypropylene.

7. Process for the production of a laminated sheet according to claims 1 through 6, characterized in that a thermoplastic substrate polymer and a copolymerisate consisting of 70 to 90 mol percent of ethylene units and 10 to 30 mol percent of vinyl acetate units are coextruded together.

8. Use of a laminated sheet according to claims 1 thorugh 6 for peelable high-frequency welds.

9. Use according to claim 8 for bag packages welded in a peelable manner at the opening thereof.